Europäisches Patentamt

European Patent Office

Office européen des brevets

(11) Publication number: **0 409 807 A2**

# EUROPEAN PATENT APPLICATION

(21) Application number: 90830331.6

(51) Int. Cl.⁵: **H02G 3/06**

(22) Date of filing: **17.07.90**

(30) Priority: **19.07.89 IT 5326289 U**

(43) Date of publication of application:
**23.01.91 Bulletin 91/04**

(84) Designated Contracting States:
**AT BE CH DE DK ES FR GB GR LI LU NL SE**

(71) Applicant: **GAMMA P INDUSTRIALE SOCIETA PER AZIONI:**
**Via Umberto Giordano 1**
**I-15100 Allessandria(IT)**

(72) Inventor: **Cerafogli, Fernando**
**Via XXIV Maggio 48**
**I-15100 Alessandria(IT)**
Inventor: **Marzolla, Agostino**
**Via De Gasperi 59**
**I-15100 Alessandria(IT)**

(74) Representative: **Buzzi, Franco et al**
**c/o Jacobacci-Casetta & Perani S.p.A. Via Alfieri, 17 17**
**I-10121 Torino(IT)**

(54) A protective conduit for electrical cables.

(57) A protective conduit (1) for electrical cables comprises successive portions (1a,1b) constituted by a channel (2) and a cover (3) and connected to each other or to any junction boxes by means of connecting elements (15,115,215) constituted by connectors (16) in which the ends of the conduit portions are coupled by longitudinal insertion, and a connector cover (17) which is fitted onto the connector.

FIG. 4

# A PROTECTIVE CONDUIT FOR ELECTRICAL CABLES

The present invention relates to protective conduits for electrical cables, of the type comprising successive portions each constituted by a channel and a cover which is fitted sealingly to the channel in such a way that it can be opened, possible junction boxes, and sealing connecting elements for connecting the portions of the conduit to each other or to any junction boxes.

The object of the present invention is to provide a conduit of the type defined above which has simple, functional and quickly-assembled connecting elements and which ensures a high degree of protection against the entry of dust or other solid particles, as well as of liquids, to the conduit.

According to the invention, this object is achieved by means of a conduit for electrical cables of the type defined above, characterised in that each connecting element comprises:
- a connector whose general shape corresponds to that of the channel, including at least one arm which can be inserted longitudinally with form coupling in the corresponding end of a portion of conduit and having an outer raised abutment for abutting the end part of the channel and supporting the end part of the cover of the end of the portion of conduit, and an outer wall which partially surrounds the abutment and, with the surface of the arm, defines a space in which the end part of the channel of the portion of conduit can be fitted,
- screw means for fixing the side walls of the channel of the portion of conduit to the respective arm of the connector,
- a connector cover whose general shape corresponds to that of the cover and which is superposed in sealing contact with the end part of the cover of the conduit portion, and
- means for snap-coupling the connector cover to the outer wall of the connector.

Conveniently, the snap-coupling means are constituted by complementary longitudinal notches with saw-tooth profiles formed in the upper regions of the outer wall of the connector and in two downwardly-bent lateral flanges of the connector cover, respectively.

When two adjacent portions of conduit are to be connected, the connector has two opposed arms for coupling to the ends of the two conduit portions and its outer abutment defines two opposite stops and supports for the ends of the channels and of the covers of the facing ends of the two portions respectively. In this case, the outer wall of the connector defines two opposed spaces in which the end parts of the channels of the two portions of conduit can be fitted and the connector cover is superposed on the end parts of the covers of the two portions.

If the connecting element has to constitute the final end of the conduit, the arm of the connector has a vertical closure plate at its end opposite the portion of conduit.

If the connecting element is intended for connecting the conduit to a junction box, however, the arm of the connector has an annular flange at its opposite end from the portion of conduit for fixing to an open face of a parallelepipedal junction box having further open faces which can be closed by means of removable plates.

By virtue of the aforesaid shape of the connecting elements, the conduit according to the invention ensures protection against the entry of solid bodies and liquids at a level equal to grade IP 55 of the CEI 70-1 and IEC 529 tables.

The invention will now be described in detail with reference to the appended drawings, provided purely by way of non-limiting example, in which:

Figure 1 is a perspective view of a sealed portion of conduit for electrical cables according to the invention,

Figure 2 is a cross-section taken on the line II-II of Figure 1, on an enlarged scale,

Figure 3 is a longitudinal section taken on the line III-III of Figure 1, on an enlarged scale,

Figure 4 is an exploded perspective view of Figure 1,

Figure 5 is a perspective view of a first variant of the connecting element of the conduit.

Figure 6 shows the conduit with the connecting element of Figure 5, in perspective,

Figure 7 is an exploded view of Figure 6, and

Figure 8 shows a second variant of the connecting element of the conduit.

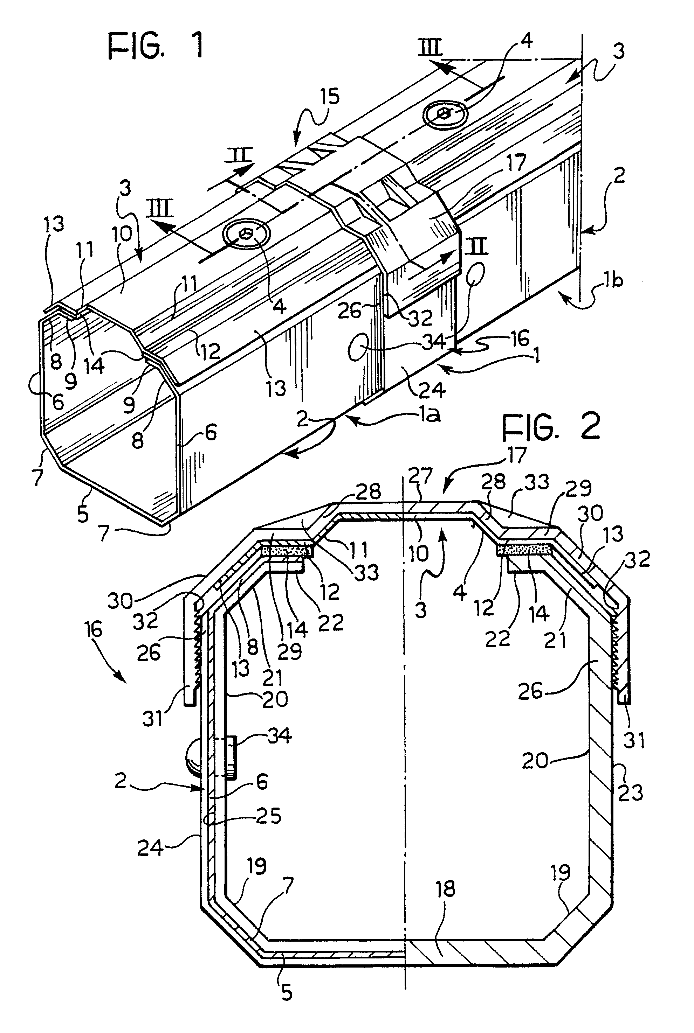

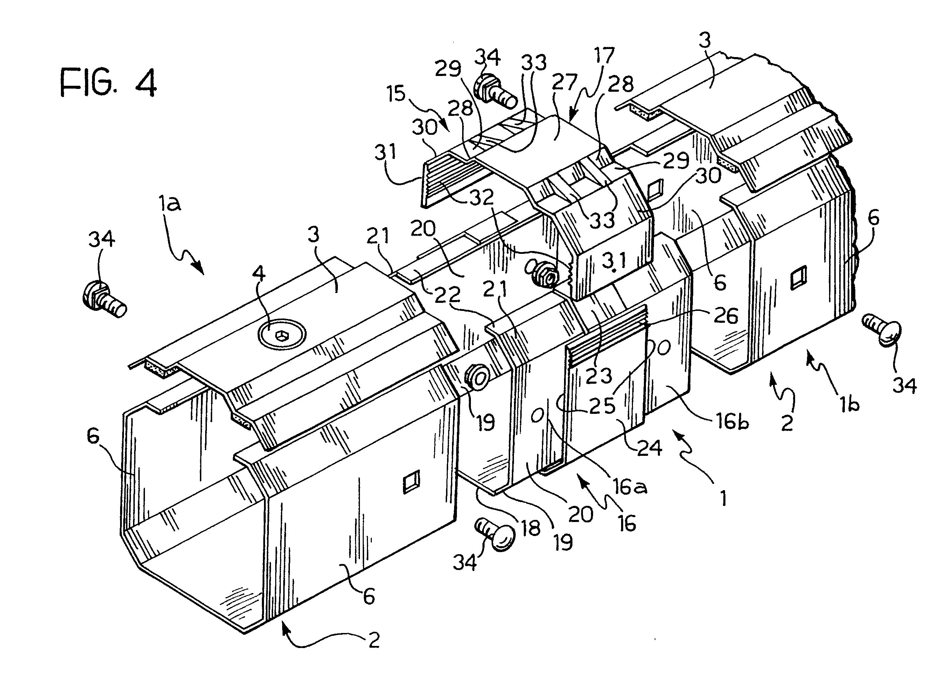

With reference initially to Figures 1 to 4, a sealed conduit for electrical cables according to the invention is generally indicated 1 and is constituted by a plurality of adjacent portions 1a, 1b interconnected in a hermetically sealed manner by connecting elements 15.

Each portion 1a, 1b of the conduit 1 comprises a channel 2 and a cover 3 which is fixed removably to the channel 2 by means of revolving catches 4 carried by the cover 3.

The channel 2 comprises a horizontal base wall 5 and two vertical side walls 6 connected to the base wall 5 by means of respective inclined portions 7. The free ends of the side walls 6 are bent inwardly of the conduit 1 by means of respective inclined portions 8 similar to the upper inclined portions 7 and respective horizontal end portions 9.

The cover 3 has a horizontal central portion 10 whose side edges are bent to form respective inclined portions 11 connected to horizontal portions 12 and inclined end portions 13. The portions 12 and 13 of the cover 3 are superposed on the portions 9 and 8 of the channel 2 and longitudinal sealing strips 14 are interposed between the portions 12 and 9.

The connecting element 15 between the two portions 1a, 1b of the conduit 1 is constituted by a connector 16 and a connector cover 17.

The connector 16 has a geometrical profile generally identical to that of the channels 2 with a horizontal base wall 18 connected by two inclined portions 19 to two vertical side walls 20 terminating in respective inclined portions 21 and horizontal portions 22. The cross-section of the profile defined by the walls 18-22 is slightly smaller than that of the corresponding profile of the channels 6 so as to define two opposite longitudinal arms 16a, 16b which can be inserted longitudinally with form coupling in the channels 6 of the portions 1a and 1b, respectively.

The two arms 16a, 16b are separated by an external, central raised abutment 23 which, as will be made clearer below, acts as a stop for the end edges of the channels 6 and, in the regions corresponding to the horizontal portions 22, as a support for the ends of the horizontal portions 12 of the covers 3 of the two portions 1a, 1b.

In the central regions of the base walls 18, the inclined portions 19 and the side walls 20, the connector 16 has a wall 24 formed outwardly of the abutment 23 and projecting beyond the opposite sides thereof, so as to define, with the outer faces of the walls 18, 19 and 20, two opposite spaces 25 which are adapted to house the end parts of the respective channels 6 of the two portions 1a, 1b by means of insertion, in the manner which will be explained further below.

The upper ends of the outer wall 24 (which correspond to the upper regions of the vertical walls 20 adjacent the inclined portions 21) are formed with two sets 26 of longitudinal notches with saw-tooth profiles.

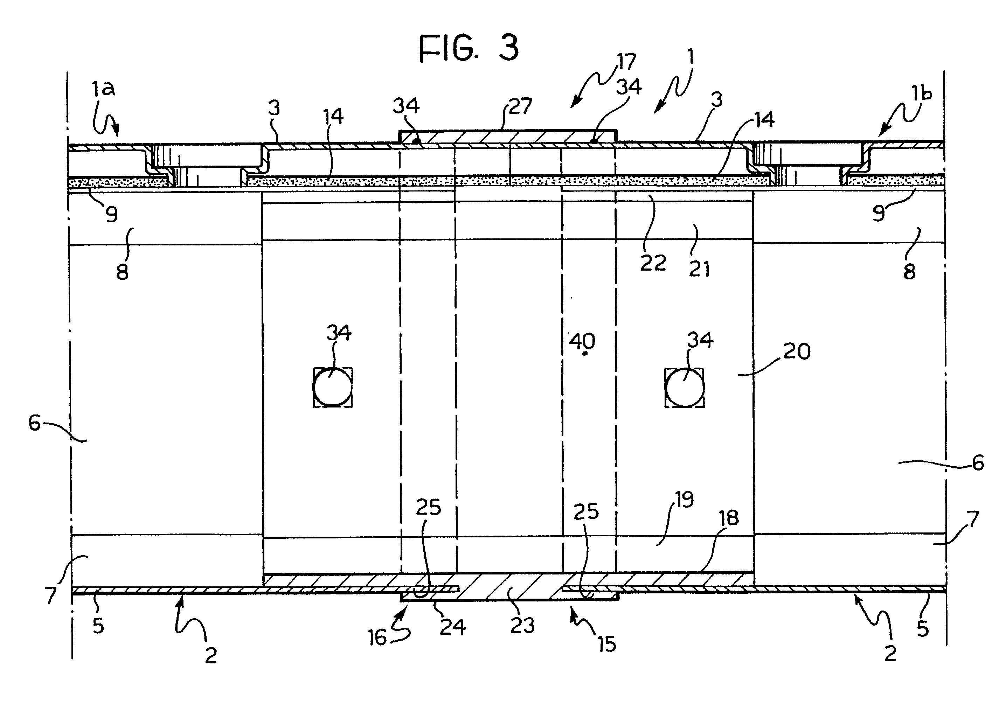

The shape of the connector cover 17 corresponds generally to that of the covers 3, with a horizontal central region 27 connected at its sides to inclined portions 28 which are connected in turn to horizontal portions 29 connected to inclined portions 30 terminating in two vertical flanges 31 with internal longitudinal notches 32 with saw-tooth profiles complementary to those of the notches 26 of the wall 24. The inclined portions 28 and the horizontal portions 29 are connected by stiffening ribs 33 and seals 34 (Figure 3) are fitted to the inner face of the horizontal portion 27.

The width of the connector cover 17 (that is, its dimension longitudinally of the conduit 1) is the same as that of the outer wall 24 of the connector 16.

The two portions 1a, 1b and the connecting element 15 are assembled as follows. After the covers 3 and the channels 2 have been interconnected, the portions 1a and 1b are arranged on opposite sides of the connecting element 15 and brought end-to-end so that they slide along the arms 16a, 16b respectively. The ends of the channels 6 thus fit into the corresponding spaces 25 until the end edges of the channels 6 stop against the corresponding edges of the abutment 23. In this position, the facing ends of the two covers 3 which project slightly beyond the corresponding edges of the channels 6 are in mutual abutment and their respective side portions 12 and seals 14 bear on the end regions of the abutment 23 which correspond to the horizontal end portions 22 of the connector 16 (Figures 2 and 3).

At this point, the walls 6 of the channels 2 are fixed to the walls 20 of the respective arms 16a, 16b of the connector 16 by means of transverse bolts 34 inserted through the walls.

Finally, the connector cover 17 is fitted by its being arranged above the connector 16 astride its outer wall 24 and pushed fully downwardly so that the notches 32 snap-engage the notches 26. The parts 27, 28, 29 and 30 of the connector cover 17 are thus arranged in sealing contact (by means of the seals 34), with the corresponding portions 10, 11 and 13 of the adjacent ends of the two covers 3 of the portions 1a, 1b.

The notches 26 and 32 enable any sliding of the connector cover 17 relative to the connector 16 for adjustment.

In order to disconnect the portions 1a and 1b from the connecting element 15, the steps described above must be carried out in reverse: in order to remove the connector cover 17, a tool (for example a screwdriver) must be inserted between the outer wall 24 and one of the flanges 31 so that the flanges 31 can be levered and deformed and the corresponding notches 32 and 26 disengaged.

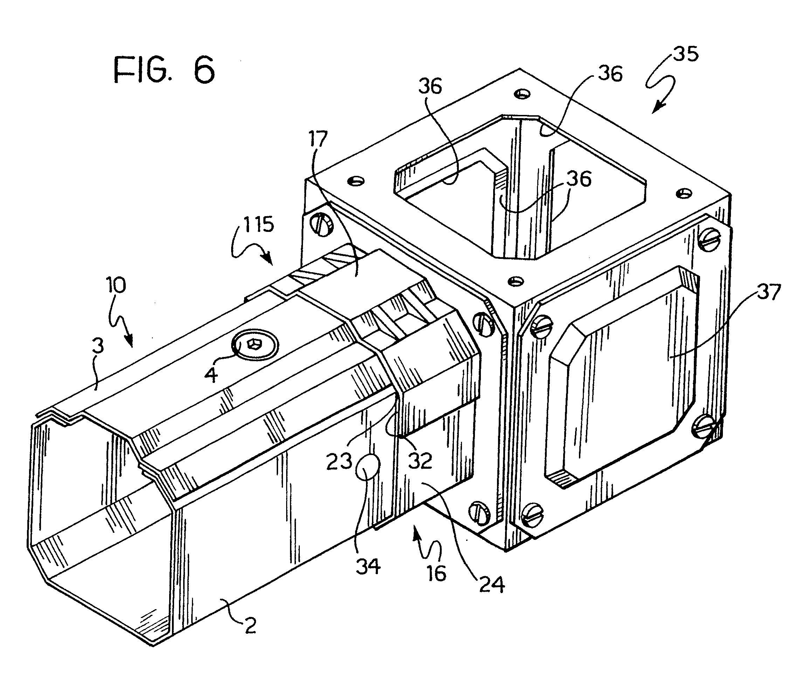

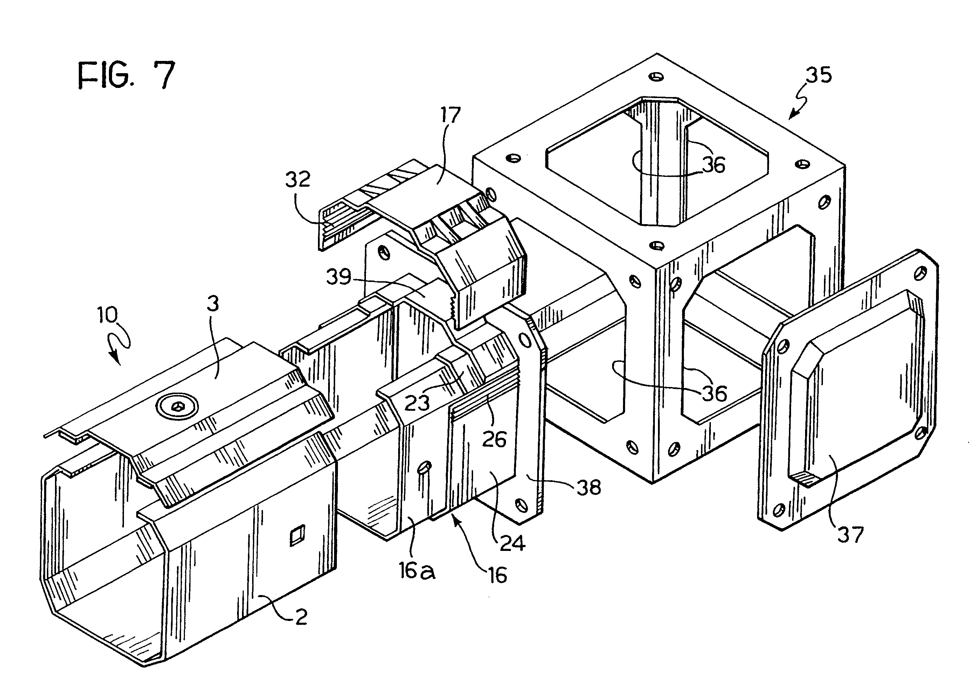

Figures 6 and 7 (in which parts identical or similar to those described above are indicated by the same reference numerals) show part of a conduit according to the invention constituted by a portion 1c which is identical to the portions 1a, 1b described above and is fitted to a junction box 35.

The box 35 is generally cubic in shape with open faces 36 of which those not in use are closed by plates 37 which are screwed on so that they can be opened quickly.

A connecting element 115 is used to connect the portion 1c to one of the open faces 36, and this differs from the connecting element 15 of Figures 1 to 4 solely in that the connector 16 includes only one arm 16a. The other arm 16b is replaced by an annular flange 38 arranged adjacent the end of the outer wall 24 opposite the portion 1c and fixed to the corresponding open face 36 of the junction box 35.

Moreover, adjacent the flange 38, the connector 16 of the connecting element 115 has an upper closure portion 39 which is the same shape as the cover 3 of the portion 1c and extends for half the width of the raised abutment 23 to form a butt joint with the end edge of the cover 3 of the portion 1c.

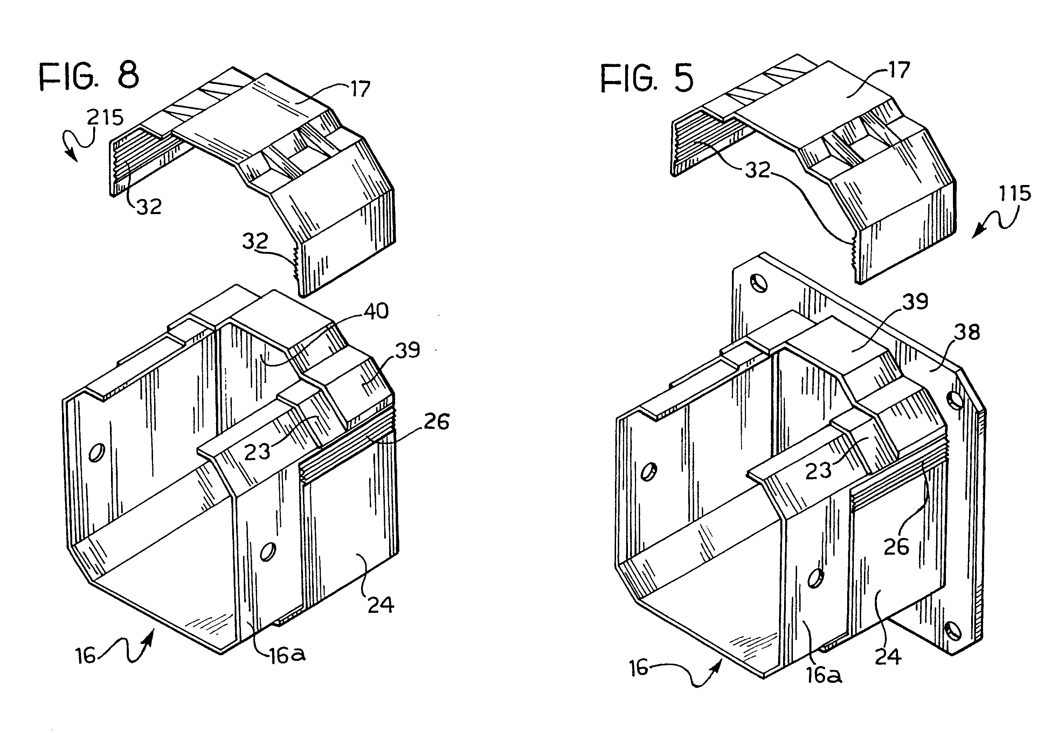

Finally, Figure 8 shows a connecting element 215 which can be used as an end piece for the conduit 1. The connecting element 215 is similar to the connecting element 115 of Figures 5 to 7 and differs therefrom solely in that, at the opposite end of the connector 16 from the arm 16a which is intended to be connected to the portion 1c of the conduit 1 in the manner described above, it has a vertical closure plate 40 which replaces the annular flange 38.

## Claims

1. A protective conduit for electrical cables, comprising successive portions each constituted by a channel and a cover which is fitted sealingly to the channel in such a way that it can be opened, possible junction boxes, and sealing connecting elements for connecting the portions of the conduit to each other or to any junction boxes, characterised in that each connecting element (15, 115,215) comprises:

- a connector (16) whose general shape corresponds to that of the channel (6), including at least one arm (16a, 16b) which can be inserted longitudinally with form coupling in the corresponding end of a portion (1a, 1b) of conduit (1) and having an outer raised abutment (23) for stopping the end part of the channel (6) and supporting the end part of the cover (3) of the end of the portion (1a, 1b) of conduit (1), and an outer wall (24) which partially surrounds the raised abutment (23) and, with the surface of the arm (16a, 16b), defines a space (25) in which the end part of the channel (6) of the portion (1a, 1b) of conduit (1) can be fitted,

- screw means (34) for fixing the side walls (6, 20) of the channel (6) of the portion (1a, 1b) of conduit (1) to the respective arm (16a, 16b) of the connector (16),

a connector cover (17) whose general shape corresponds to that of the cover (3) and which is superposed in sealing contact with the end part of the cover (3) of the portion (1a, 1b) of conduit (1), and

- means (26, 32) for snap-coupling the connector cover (17) to the outer wall (24) of the connector (16).

2. A conduit according to Claim 1, characterised in that the snap-coupling means are constituted by complementary longitudinal notches (26, 32) with saw-tooth profiles formed in the upper regions of the outer wall (24) of the connector (16) and in two downwardly-bent lateral flanges (31) of the connector cover (17), respectively.

3. A conduit according to Claim 1 or Claim 2, characterised in that the connector (16) has two opposed arms (16a, 16b) for coupling to the ends of two adjacent portions (1a, 1b) of conduit (1), in that the outer abutment (23) defines two opposed stops and supports for the end parts of the channels (2) and of the covers (3) of the facing ends of the two portions (1a, 1b) of conduit (1) respectively,in that the outer wall (24) defines two opposed spaces (25) in which the end parts of the channels (6) of the two portions (1a, 1b) of conduit (1) can be fitted, and in that the connector cover (17) is superposed sealingly on the end parts of the covers (3) of the two portions (1a, 1b) of conduit (1).

4. A conduit according to Claim 1 or Claim 2, characterised in that the connector (16) has a single arm (16a) and, at its opposite end therefrom, is formed with a vertical closure plate (40).

5. A conduit according to Claim 1 or Claim 2, characterised in that the connector (16) has a single arm (16a) and, at its opposite end therefrom, is formed with an annular flange (38) for fixing to a parallelepipedal junction box (35) having open faces (36) which can be closed by means of removable plates (37).

6. A conduit according to Claim 4 or Claim 5, characterised in that, at its end opposite the single arm (16a), the connector (16) has an upper closure portion (39) identical in shape to the covers (3) of the portions (1a, 1b) of conduit (1).

FIG. 1

FIG. 2

FIG. 3

FIG. 4

EP 0 409 807 A2

FIG. 6

FIG. 7

EP 0 409 807 A2

FIG. 8

215

17

32

32

40

39

23

26

24

16

16a

FIG. 5

17

32

115

39

38

23

26

24

16

16a

EP 0 409 807 A2